(19) Europäisches Patentamt
European Patent Office
Office européen des brevets

(11) EP 2 497 928 A1

(12) **DEMANDE DE BREVET EUROPEEN**

(43) Date de publication:
**12.09.2012 Bulletin 2012/37**

(51) Int Cl.:
**F02D 41/22** (2006.01) **F02B 39/16** (2006.01)
**F02D 41/00** (2006.01) **F02B 37/12** (2006.01)

(21) Numéro de dépôt: **12156938.8**

(22) Date de dépôt: **24.02.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.03.2011 FR 1151958**

(71) Demandeur: **Peugeot Citroën Automobiles SA 78140 Vélizy Villacoublay (FR)**

(72) Inventeur: **Jousselin, Miguel 78400 CHATOU (FR)**

(54) **Procédé de détection d'un défaut dans un système comportant un moteur a combustion interne et un turbocompresseur**

(57) L'invention concerne un procédé de détection d'un défaut dans un système comportant un moteur à combustion interne (2) et un turbocompresseur (9).

Selon l'invention, le procédé comprend une étape de détermination de la puissance ($P_{comp}$) du compresseur (11) à partir de paramètres de l'air circulant dans une conduite d'admission (3) du moteur (2), une étape de détermination de la puissance ($P_{turb}$) de la turbine (10) à partir de paramètres des gaz de combustion circulant dans une conduite d'échappement (4), et une étape de détection d'un défaut dans le système lors de laquelle un défaut est détecté à partir de la comparaison de la puissance ($P_{turb}$) de la turbine (10) et de celle ($P_{comp}$) du compresseur (11).

Fig.1

EP 2 497 928 A1

**Description**

L'invention concerne un procédé permettant de détecter un défaut dans un système comprenant un moteur à combustion interne et un turbocompresseur, notamment une fuite dans la ligne d'admission à haute pression.

Du fait du coût élevé d'un capteur de régime du turbocompresseur, la gestion du turbocompresseur est souvent basée sur les données reçues par un capteur de pression de l'air en sortie du compresseur. Cependant, l'utilisation de cette seule donnée pose des problèmes. En effet, cette pression est asservie et donc les défauts qui seraient détectés par le capteur seront dans un premier temps compensés par le système de régulation. De plus, la pression de l'air en sortie du compresseur en représente pas directement la contrainte mécanique existant sur le turbocompresseur et notamment sur l'arbre turbocompresseur dont des vitesses excessives peuvent causer de graves défaillances, telles que des détériorations ou des destructions de pales du compresseur ou de la turbine.

L'invention vise à résoudre un ou plusieurs de ces inconvénients, et notamment d'améliorer la détection de défaillance du système comprenant le turbocompresseur.

L'invention porte ainsi sur un procédé de détection d'un défaut dans un système comportant un moteur à combustion interne et un turbocompresseur, **caractérisé en ce qu'**il comprend une étape de détermination de la puissance du compresseur à partir de paramètres de l'air circulant dans la conduite d'admission du moteur, une étape de détermination de la puissance de la turbine à partir de paramètres des gaz de combustion circulant dans la conduite d'échappement, et une étape de détection d'un défaut dans le système lors de laquelle un défaut est détecté à partir de la comparaison de la puissance de la turbine et de celle du compresseur.

Du fait que dans un turbocompresseur, l'arbre est commun à la turbine et au compresseur, la puissance de la turbine et celle du compresseur sont égales. S'il apparaît une différence (au-delà d'un écart de tolérance), étant donné que les puissances sont déterminées à partir de paramètres de l'air en admission (débit, température et pression en amont et en aval du compresseur) et des gaz d'échappement (débit, température et pression en amont et en aval de la turbine), cela signifie qu'il y a une défaillance dans le système, en général une fuite d'air ou de gaz (a priori, une fuite d'air à haute pression).

La présente invention permet donc de déterminer très rapidement un défaut dans le système composé du turbocompresseur et du moteur.

Selon un premier mode de réalisation particulier, un défaut est détecté quand l'écart entre la puissance de la turbine et celle du compresseur est supérieur à une valeur de tolérance.

Selon un second mode de réalisation particulier, le procédé de détection de défaut comprend une étape de détermination du régime du turbocompresseur par interpolation du champ compresseur du turbocompresseur, une étape de détermination du régime du turbocompresseur à partir d'un bilan de puissance de l'arbre compresseur par comparaison de puissance de la turbine et de celle du compresseur, et une étape de détermination lors de laquelle un défaut est détecté à partir de la comparaison des deux valeurs du régime du turbocompresseur.

Selon une première variante du second mode de réalisation, un défaut est détecté quand l'écart entre le régime du turbocompresseur déterminé par interpolation et celui déterminé à partir du bilan de puissance est supérieur à une valeur d'erreur.

Selon une seconde variante du second mode de réalisation, la détermination du régime du turbocompresseur par le bilan de puissance est réalisée à partir d'une intégration dans le temps de l'écart entre la puissance de la turbine et celle du compresseur.

Selon un troisième mode de réalisation particulier, la puissance du compresseur est déterminée à partir de la formule suivante :

$$P_{comp} = \frac{Q_a \, Cp_a \, T_1}{\eta_{comp}} \left( \left( \frac{P_2}{P_1} \right)^{\frac{\gamma_a - 1}{\gamma_a}} - 1 \right)$$

Avec, $P_{comp}$ la puissance du compresseur, $Q_a$ le débit d'air traversant le compresseur, $Cp_a$ la capacité thermique massique à pression constante de l'air, $\gamma_a$ le rapport des capacités thermiques massiques à pression et à volume constant de l'air, $\eta_{comp}$ le rendement du compresseur, $T_1$ la température de l'air à l'entrée du compresseur, $P_1$ la pression de l'air à l'entrée du compresseur, et $P_2$ la pression de l'air en sortie du compresseur.

Selon une variante du troisième mode de réalisation, le rendement du compresseur est déterminé à partir d'une cartographie dont les paramètres d'entrée sont un débit d'air corrigé traversant le compresseur et le rapport de compression.

Selon un quatrième mode de réalisation particulier, la puissance de la turbine est déterminée à partir de la formule suivante :

$$P_{turb} = \eta_{turb}\ Q_g\ Cp_g\ T_3\left(\left(\frac{P_4}{P_3}\right)^{\frac{\gamma_g - 1}{\gamma_g}} - 1\right)$$

Avec, $P_{turb}$ la puissance de la turbine, Qg le débit de gaz d'échappement traversant la turbine, $Cp_g$ la capacité thermique massique à pression constante des gaz d'échappement, $\gamma_g$ le rapport des capacités thermiques massiques à pression et à volume constant des gaz d'échappement, $\eta_{turb}$ le rendement de la turbine, $T_3$ la température des gaz d'échappement à l'entrée de la turbine, $P_3$ la pression des gaz d'échappement à l'entrée de la turbine, et $P_4$, la pression des gaz d'échappement en sortie de la turbine.

Selon une variante du quatrième mode de réalisation, le rendement de la turbine est déterminé à partir d'une cartographie dont les paramètres d'entrée sont un débit des gaz d'échappement corrigé traversant la turbine et le rapport de détente.

D'autres caractéristiques et avantages de l'invention ressortiront clairement de la description qui en est faite ci-après, à titre indicatif et nullement limitatif, en référence aux dessins annexés, dans lesquels :

• la figure 1 illustre un ensemble motopropulseur d'un véhicule automobile, et
• la figure 2 représente le champ compresseur du turbocompresseur de l'ensemble motopropulseur de la figure 1.

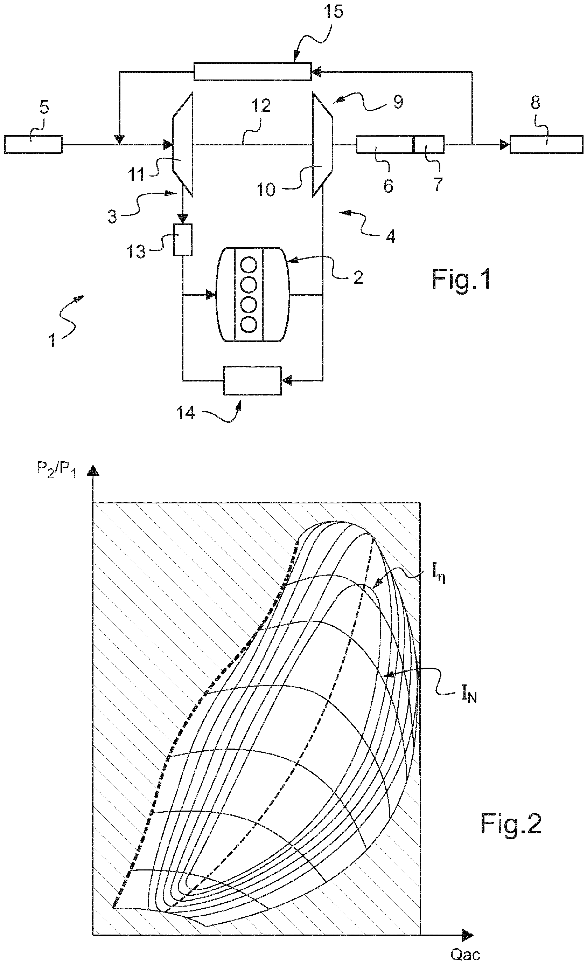

La figure 1 représente un ensemble motopropulseur 1 d'un véhicule automobile, l'ensemble motopropulseur 1 comprenant un moteur à combustion interne 2 (pouvant être un moteur à essence ou un moteur diesel) alimenté notamment en air par une conduite d'admission 3, et produisant des gaz d'échappement emmenés par une conduite d'échappement 4. La conduite d'admission 3 comprend, en amont, un filtre à air 5, et la conduite d'échappement 4 comprend, en aval, un dispositif catalytique 6 adapté à traiter les gaz d'échappement, un filtre à particules 7, et un dispositif d'échappement 8.

L'ensemble motopropulseur 1 comprend également un turbocompresseur 9 qui comporte une turbine 10 (qui peut être à géométrie variable ou à géométrie fixe avec une soupape de dérivation), un compresseur 11 et un arbre 12. La turbine 10 est alimentée par des gaz d'échappement à haute pression issue du moteur 2 et rejette ces gaz d'échappement à basse pression vers le dispositif catalytique 6. Le compresseur 11 est alimenté par l'air filtré à basse pression et délivre au moteur 2 de l'air à haute pression. L'arbre 12 permet de transmettre au rotor du compresseur 11 le mouvement du rotor de la turbine 10 entraîné par les gaz d'échappement. L'ensemble motopropulseur 1 comprend également un refroidisseur d'air à haute pression 13 permettant de refroidir l'air comprimé avant son introduction dans le moteur 2.

Dans le présent mode de réalisation, l'ensemble motopropulseur 1 comprend également un dispositif de recirculation des gaz haute pression 14 qui permet de réintroduire en aval du compresseur 11 une partie des gaz d'échappement prélevés en amont de la turbine 10. Il comprend également un dispositif de recirculation des gaz basse pression 15 qui permet de réintroduire en amont du compresseur 11 une partie des gaz d'échappement prélevés en aval de la turbine 10.

L'ensemble motopropulseur 1 comprend également un système électronique de commande qui permet de contrôler et de commander le turbocompresseur 9.

Dans le présent mode de réalisation, afin d'obtenir les données nécessaire au contrôle du turbocompresseur 9 et à la détermination d'une éventuelle défaillance du système comprenant le moteur 2 et le turbocompresseur 9, l'ensemble motopropulseur 1 comprend un premier débitmètre permettant de déterminer le débit d'air $Q_a$ traversant le compresseur 11, un second débitmètre permettant de déterminer le débit de gaz d'échappement Qg traversant la turbine 10, une première sonde de température permettant de déterminer la température $T_1$ de l'air en amont du compresseur 11, une seconde sonde de température permettant de déterminer la température $T_3$ des gaz d'échappement en amont de la turbine 10, une première sonde de pression permettant de déterminer la pression $P_1$ de l'air en amont du compresseur 11, une seconde sonde de pression permettant de déterminer la pression $P_2$ de l'air en aval du compresseur 11, une troisième sonde de pression permettant de déterminer la pression $P_3$ des gaz d'échappement en amont de la turbine 10, et une quatrième sonde de pression permettant de déterminer la pression $P_4$ des gaz d'échappement en aval de la turbine 10.

Ces différents capteurs permettent de réguler le turbocompresseur 9 en asservissant la pression $P_2$ de l'air en aval du compresseur 11 (et donc en admission du moteur 2).

Conformément à la présente invention, ces différents capteurs permettent également de détecter un défaut dans le système comportant un moteur à combustion interne 2 et un turbocompresseur 9 en comparant la puissance de la turbine 10 et celle du compresseur 11.

Le procédé de détection de défaut comprend une étape de détermination de la puissance $P_{comp}$ du compresseur 11 à partir de paramètres de l'air circulant dans la conduite d'admission 3 du moteur 2, une étape de détermination de la puissance $P_{turb}$ de la turbine 10 à partir de paramètres des gaz de combustion circulant dans la conduite d'échappement 4, et une étape de détection d'un défaut par la comparaison de la puissance $P_{turb}$ de la turbine 10 et de celle $P_{comp}$ du compresseur 11.

De façon plus précise, dans le présent mode de réalisation, la puissance $P_{comp}$ du compresseur 11 est déterminée à partir de la formule suivante :

$$P_{comp} = \frac{Q_a \ Cp_a \ T_1}{\eta_{comp}} \left( \left( \frac{P_2}{P_1} \right)^{\frac{\gamma_a - 1}{\gamma_a}} - 1 \right)$$

Dans cette formule, $Q_a$ est le débit d'air traversant le compresseur 11 mesurée par le premier débitmètre, $T_1$ est la température de l'air à l'entrée du compresseur 11 mesurée par la première sonde de température, $P_1$ est la pression de l'air à l'entrée du compresseur 11 mesurée par la première sonde de pression, et $P_2$ est la pression de l'air en sortie du compresseur 11 mesurée par la seconde sonde de pression.

Egalement dans cette formule, $Cp_a$ est la capacité thermique massique à pression constante de l'air et $\gamma_a$ est le rapport des capacités thermiques massiques à pression et à volume constant de l'air ($Cp_a/Cv_a$). Ces deux valeurs peuvent chacune être soit considérée comme une constante pour la plage de valeurs que la température $T_1$ peut prendre, soit considérée comme dépendante de la température $T_1$ et être déterminée en conséquence par le système électronique de commande.

Enfin, $\eta_{comp}$ est le rendement du compresseur 11. Dans le présent mode de réalisation, le rendement $\eta_{comp}$ du compresseur 11 est déterminé à partir d'une cartographie dont les paramètres d'entrée sont le débit d'air corrigé $Q_{ac}$ traversant le compresseur 11 et le rapport de compression $P_2/P_1$ du compresseur 11. Le débit d'air corrigé $Q_{ac}$ est déterminé en fonction de la température $T_1$ et de la pression $P_1$ de l'air en entrée du compresseur 11 et d'une température $T_0$ et une pression $P_0$ de référence par la formule suivante :

$$Qac = Qa \frac{P_0}{P_1} \sqrt{\frac{T_1}{T_0}}$$

Dans le présent mode de réalisation, la puissance $P_{turb}$ de la turbine 10 est déterminée à partir de la formule suivante :

$$P_{turb} = \eta_{turb} \ Q_g \ Cp_g \ T_3 \left( \left( \frac{P_4}{P_3} \right)^{\frac{\gamma_g - 1}{\gamma_g}} - 1 \right)$$

Dans cette formule, $Qg$ est le débit des gaz d'échappement traversant la turbine 10 mesurée par le second débitmètre, $T_3$ est la température des gaz d'échappement à l'entrée de la turbine 10 mesurée par la seconde sonde de température, $P_3$ est la pression des gaz d'échappement à l'entrée de la turbine 10 mesurée par la troisième sonde de pression, et $P_4$ est la pression des gaz d'échappement en sortie de la turbine 10 mesurée par la quatrième sonde de pression.

Egalement dans cette formule, $Cpg$ est la capacité thermique massique à pression constante des gaz d'échappement et $\gamma_g$ est le rapport des capacités thermiques massiques à pression et à volume constant des gaz d'échappement ($Cpg/Cvg$). Ces deux valeurs peuvent chacune être soit considérée comme une constante pour la plage de valeurs que la température $T_3$ peut prendre, soit considérée comme dépendante de la température $T_3$ et être déterminée en conséquence par le système électronique de commande.

Enfin, $\eta_{tubr}$ est le rendement de la turbine 10. Dans le présent mode de réalisation, le rendement $\eta_{turb}$ de la turbine 10 est déterminé à partir d'une cartographie dont les paramètres d'entrée sont le débit des gaz d'échappement corrigé $Q_{gc}$ traversant la turbine 10 et le rapport de détente $P_4/P_3$ de la turbine 10. Le débit d'air corrigé $Q_{gc}$ est déterminé en fonction de la température $T_3$ et de la pression $P_3$ des gaz d'échappement en entrée de la turbine 10 et d'une température $T_{0'}$ et une pression $P_{0'}$ de référence par la formule suivante :

$$Qgc = Qg\,\frac{P_{0'}}{P_3}\sqrt{\frac{T_3}{T_{0'}}}$$

Dans le présent mode de réalisation, le procédé de détection comprend également une étape de détermination du régime $N_{cc}$ du turbocompresseur 9 par interpolation du champ compresseur de ce dernier. De façon classique, un champ compresseur tel que celui illustré à la figure 2, permet de déterminer d'une part le rendement du compresseur $\eta_{comp}$ représenté par des courbes d'iso-rendement $I_\eta$, et d'autre part le régime $N_{cc}$ du turbocompresseur 9 représenté par des courbes iso-régime $I_N$, à partir de paramètres d'entrée qui sont le débit d'air corrigé $Q_{ac}$ et le rapport de compression $P_2/P_1$.

Le procédé de détection comprend également une étape de détermination du régime $N_{bp}$ du turbocompresseur 9 à partir du bilan de la comparaison entre la puissance de l'arbre compresseur 12 par comparaison de puissance $P_{turb}$ de la turbine 10 et de celle $P_{comp}$ du compresseur 11.

Enfin, le procédé de détection comprend une étape de détermination d'un défaut lors de laquelle un défaut est détecté par une comparaison du régime $N_{cc}$ du turbocompresseur 9 déterminé par interpolation et celui $N_{bp}$ déterminé à partir du bilan de puissance (plus précisément, le défaut est détecté quand la différence entre les deux régimes est supérieure à une valeur de tolérance).

Dans le présent mode de réalisation, le régime $N_{bp}$ du turbocompresseur 9 par le bilan de puissance est réalisée à partir d'une intégration dans le temps de l'écart entre la puissance $P_{turb}$ de la turbine 10 et celle $P_{comp}$ du compresseur 11. De façon plus précise, le bilan de puissance est donné par la formule suivante :

$$P_{turb} - P_{comp} = \frac{d}{dt}\left(\frac{1}{2}\,J\,N_{bp}{}^2\right)$$

Dans cette formule, J le moment d'inertie de l'arbre 12 du turbocompresseur 9.

Le système électronique de commande détermine à un temps t le régime $N_{bp}$ du turbocompresseur 9 selon la formule suivante :

$$N_{bp} = \sqrt{\frac{2\Delta t}{J}\left(\left(P_{turb} - P_{comp}\right)_{t-\Delta t} + \left(P_{turb} - P_{comp}\right)_t\right)}$$

Dans cette formule, $\Delta t$ est le pas du calculateur, et $(P_{turb}\text{-}P_{comp})_t$ et $(P_{turb}\text{-}P_{comp})_{t\text{-}\Delta t}$ sont les écarts de puissance déterminés, respectivement, à l'instant t et à l'instant t-$\Delta t$.

Ainsi, selon l'invention, il est possible de déterminer la présence d'un défaut dans le système comprenant le moteur 2 et le turbocompresseur 9 (ainsi que les différents éléments les reliant, dont les conduites) à partir de données physiques de l'air et des gaz d'échappement (débit, température et pression) aisément mesurables.

La présente invention n'est pas limitée au présent mode de réalisation.

Ainsi, il serait possible qu'au moins un des paramètres utilisés pour la détermination de l'une ou l'autre des puissances ne soit pas mesurée mais calculée à partir d'autres paramètres.

Il serait également possible de détecter un défaut directement par une comparaison de la puissance $P_{turb}$ de la turbine 10 et celle $P_{comp}$ du compresseur 11 (plus précisément, de déterminer un défaut si la différence entre les deux puissances est supérieure à une valeur de tolérance).

**Revendications**

1. Procédé de détection d'un défaut dans un système comportant un moteur à combustion interne (2) et un turbocompresseur (9), **caractérisé en ce qu'**il comprend une étape de détermination de la puissance ($P_{comp}$) du compresseur (11) à partir de paramètres de l'air circulant dans une conduite d'admission (3) du moteur (2), une étape de détermination de la puissance ($P_{turb}$) de la turbine (10) à partir de paramètres des gaz de combustion circulant dans une conduite d'échappement (4), et une étape de détection d'un défaut dans le système lors de laquelle un défaut est détecté à partir de la comparaison de la puissance ($P_{turb}$) de la turbine (10) et de celle ($P_{comp}$) du compresseur (11), le procédé comportant de plus une étape de détermination du régime ($N_{cc}$) du turbocompresseur (9) par interpolation du champ compresseur de ce dernier, une étape de détermination du régime ($N_{bp}$) du turbocompresseur (9) à partir d'un bilan de l'arbre (12) du turbocompresseur (9) par comparaison de la puissance ($P_{turb}$) de la turbine (10) et celle ($P_{comp}$) du compresseur (11), et une étape de détermination lors de laquelle un défaut est détecté à partir de la comparaison des deux valeurs du régime du turbocompresseur (9).

2. Procédé de détection selon la revendication 1, **caractérisé en ce qu'**un défaut est détecté quand l'écart entre le régime ($N_{cc}$) du turbocompresseur (9) déterminé par interpolation et celui ($N_{bp}$) déterminé à partir du bilan de puissance est supérieur à une valeur d'erreur.

3. Procédé de détection selon l'une des revendications 1 et 2, **caractérisé en ce que** la détermination du régime ($N_{bp}$) du turbocompresseur (9) par le bilan de puissance est réalisée à partir d'une intégration dans le temps de l'écart entre la puissance ($P_{turb}$) de la turbine (10) et celle ($P_{comp}$) du compresseur (11).

4. Procédé de détection selon l'une des revendications 1 à 3, **caractérisé en ce que** la puissance ($P_{comp}$) du compresseur (11) est déterminée à partir de la formule suivante :

$$P_{comp} = \frac{Q_a \, Cp_a \, T_1}{\eta_{comp}} \left( \left( \frac{P_2}{P_1} \right)^{\frac{\gamma_a - 1}{\gamma_a}} - 1 \right)$$

Avec $Q_a$, le débit d'air traversant le compresseur (11),
$Cp_a$, la capacité thermique massique à pression constante de l'air, $\gamma_a$, le rapport des capacités thermiques massiques à pression et à volume constant de l'air,
$\eta_{comp}$, le rendement du compresseur (11),
$T_1$, la température de l'air à l'entrée du compresseur (11), $P_1$, la pression de l'air à l'entrée du compresseur (11), et $P_2$, la pression de l'air en sortie du compresseur (11).

5. Procédé de détection selon la revendication 4, **caractérisé en ce que** le rendement ($\eta_{comp}$) du compresseur (11) est déterminé à partir d'une cartographie dont les paramètres d'entrée sont le rapport de compression ($P_2/P_1$) et un débit d'air corrigé en fonction de la température ($T_1$) et de la pression ($P_1$) de l'air à l'entrée du compresseur (11).

6. Procédé de détection selon l'une des revendications 1 à 5, **caractérisé en ce que** la puissance ($P_{turb}$) de la turbine (10) est déterminée à partir de la formule suivante :

$$P_{turb} = \eta_{turb} \, Q_g \, Cp_g \, T_3 \left( \left( \frac{P_4}{P_3} \right)^{\frac{\gamma_g - 1}{\gamma_g}} - 1 \right)$$

Avec $Qg$, le débit de gaz d'échappement traversant la turbine (10), $Cpg$, la capacité thermique massique à pression constante des gaz d'échappement,
$\gamma_g$, le rapport des capacités thermiques massiques à pression et à volume constant des gaz d'échappement,
$\eta_{turb}$, le rendement de la turbine (10),

$T_3$, la température des gaz d'échappement à l'entrée de la turbine (10), $P_3$, la pression des gaz d'échappement à l'entrée de la turbine (10), et
$P_4$, la pression des gaz d'échappement en sortie de la turbine (10).

7. Procédé de détection selon la revendication 6, **caractérisé en ce que** le rendement ($\eta_{turb}$) de la turbine (10) est déterminé à partir d'une cartographie dont les paramètres d'entrée sont le rapport de détente ($P_4/P_3$) et un débit des gaz d'échappement corrigé en fonction de la température ($T_3$) et de la pression ($P_3$) des gaz d'échappement à l'entrée de la turbine (10).

Fig.1

Fig.2

Europäisches
Patentamt

European
Patent Office

Office européen
des brevets

**RAPPORT DE RECHERCHE EUROPEENNE**

Numéro de la demande

EP 12 15 6938

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 827 336 A1 (SIEMENS AG [DE]) 17 janvier 2003 (2003-01-17) * abrégé * * page 1, ligne 10 - page 2, ligne 30 * * page 4, ligne 5-22 * * page 5, ligne 18 - page 6, ligne 16 * * figures 1-4 * | 1,3,5,7 | INV. F02D41/22 F02B39/16 F02D41/00 F02B37/12 |
| A | FR 2 948 415 A1 (RENAULT SA [FR]) 28 janvier 2011 (2011-01-28) * page 4, ligne 24 - page 6, ligne 17 * * page 7, ligne 12-18 * * page 10, ligne 17 - page 11, ligne 2 * * page 12, ligne 29 - page 13, ligne 9 * * page 13, ligne 25 - page 14, ligne 8 * * page 14, ligne 18 - page 15, ligne 9 * * figures 1-4 * | 1,3,4,6 | |
| A | US 2008/040085 A1 (WANG JUNMIN [US]) 14 février 2008 (2008-02-14) * alinéas [0068] - [0073], [0078], [0080] * | 1,3,4,6 | DOMAINES TECHNIQUES RECHERCHES (IPC) F02D F02B |
| A | DE 42 14 648 A1 (BOSCH GMBH ROBERT [DE]) 4 novembre 1993 (1993-11-04) * page 4, ligne 3-16 * * figures 1,3 * | 1,3 | |

Le présent rapport a été établi pour toutes les revendications

| Lieu de la recherche | Date d'achèvement de la recherche | Examinateur |
|---|---|---|
| Munich | 10 avril 2012 | Mallo López, Manuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 15 6938

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2012

| Document brevet cité au rapport de recherche | | Date de publication | Membre(s) de la famille de brevet(s) | | Date de publication |
|---|---|---|---|---|---|
| FR 2827336 | A1 | 17-01-2003 | DE | 10134543 A1 | 13-02-2003 |
| | | | FR | 2827336 A1 | 17-01-2003 |
| | | | IT | MI20021551 A1 | 15-01-2004 |
| FR 2948415 | A1 | 28-01-2011 | AUCUN | | |
| US 2008040085 | A1 | 14-02-2008 | AUCUN | | |
| DE 4214648 | A1 | 04-11-1993 | DE | 4214648 A1 | 04-11-1993 |
| | | | JP | 6026383 A | 01-02-1994 |

EPO FORM P0460

Pour tout renseignement concernant cette annexe : voir Journal Officiel de l'Office européen des brevets, No.12/82